# EUROPÄISCHE PATENTSCHRIFT

(11) **EP 4 211 525 B1**
(45) Veröffentlichungstag und Bekanntmachung des Hinweises auf die Patenterteilung: **11.09.2024**
(21) Anmeldenummer: 22751699.4
(22) Anmeldetag: 14.07.2022
(51) Int. Cl.: G05D 1/00

(54) **VORRICHTUNG UND VERFAHREN ZUR ERZEUGUNG UND ÜBERTRAGUNG VON STEUERBEFEHLEN FÜR EIN AUTOMATISIERT FAHRENDES KRAFTFAHRZEUG**
DEVICE AND METHOD FOR GENERATING AND TRANSMITTING CONTROL COMMANDS FOR AN AUTONOMOUSLY DRIVING MOTOR VEHICLE
DISPOSITIF ET PROCÉDÉ PERMETTANT DE GÉNÉRER ET TRANSMETTRE DES INSTRUCTIONS DE COMMANDE POUR UN VÉHICULE AUTOMOBILE CIRCULANT EN MODE AUTOMATISÉ

(30) Priorität: 16.07.2021 DE 102021207578
(43) Veröffentlichungstag der Anmeldung: 19.07.2023
(73) Patentinhaber: VOLKSWAGEN AKTIENGESELLSCHAFT, 38440 Wolfsburg (DE)
(72) Erfinder: SCHNEIDER, Eugen, 38444 Wolfsburg (DE); VOGE, Hartmut, 38531 Rötgesbüttel (DE); DOBBERPHUL, Timo, 38102 Braunschweig (DE)
(74) Vertreter: Zucker, Volker
(86) Internationale Anmeldenummer: PCT/EP2022/069783
(87) Internationale Veröffentlichungsnummer: WO 2023/285613

(56) Entgegenhaltungen:
- DE-A1- 102017 218 395
- SPEIRS NEIL ET AL: "Fault Injection Based Assessment of Fail-Silence Provided by Process Duplication versus Internal Error Detection Bro SCADA View project Application acceleration on Heterogeneous Platforms View project", 1 February 2000 (2000-02-01), pages 1 - 25, XP093006232, Retrieved from the Internet <URL:https://www.researchgate.net/profile/Neil-Speirs/publication/2640644_Fault_Injection_Based_Assessment_of_Fail-Silence_Provided_by_Process_Duplication_versus_Internal_Error_Detection/links/00b7d5320682ce14f4000000/Fault-Injection-Based-Assessment-of-Fail-Silence-Provided-by-Process-Duplication-versus> [retrieved on 20221208]
- ISHIGOOKA TASUKU ET AL: "Cost-Effective Redundancy Approach for Fail-Operational Autonomous Driving System", 2018 IEEE 21ST INTERNATIONAL SYMPOSIUM ON REAL-TIME DISTRIBUTED COMPUTING (ISORC), IEEE, 29 May 2018 (2018-05-29), pages 107 - 115, XP033379046, DOI: 10.1109/ISORC.2018.00023

## Beschreibung

Die Erfindung betrifft eine Vorrichtung und ein Verfahren zur Erzeugung und Übertragung von Steuerbefehlen für ein automatisiert fahrendes Fahrzeug.

Derartige Vorrichtungen müssen fehlertolerant gegenüber Einzelfehlern sein, d.h. die Vorrichtung muss in der Lage sein, das Kraftfahrzeug beispielsweise sicher zum Stehen zu bringen oder anderweitig weiter sicher zu führen. Derartige Manöver sind auch als limb home, limb aside or break in lane bekannt. Ein möglicher Ansatz ist eine vollständige Redundanz, d.h. das parallele Arbeiten von zwei Systemen.

Aus dem Fachartikel Stott D. T. et al.: "Comparing fail-silence provided by process duplication versus internal error detection for DHCP server", Parallel and Disributed Processing Symposium, Proceedings 15th International San Francisco, CA, USA 23-27 April 2001, Los Alamitos, CA, USA, IEEE Comput. SOC, US, 23. April 2001 (2001-04-23), Seiten 279-286, XP010544394, ISBN: 978-0-7695-0990-7 ist eine gattungsgemäße Vorrichtung zur Erzeugung und Übertragung von Steuerbefehlen bekannt.

Aus dem Fachartikel Ishigooka Tasuku et al.: "Cost-Effective Redundancy Approach for Fail-Operational Autonomous Driving System", 2018 IEEE 21st International Symposium on Real-Time Distributed Computing (ISORC), IEEE 29. Mai 2018 (2018-05-29), Seiten 107-115, XP033379046, DOI: 10.1109/ISORC.2018.00023 [gefunden am 2018-07-25] ist ein fahrendes autonomes Fahrsystem mit drei verschiedenen Replikationsmethoden für ausfallsichere autonome Fahrsysteme bekannt, wobei diese Methoden eine beschleunigte Wiederherstellungsverarbeitung durch Nutzung von Eingangsdaten und interner Zustandssicherung ermöglichen.

Aus der DE 10 2017 218 395 A1 ist ein Verfahren zur fehlerrobusten Regelung eines hochautomatisierten Fahrzeugs bekannt, umfassend zumindest zwei funktional redundante Fahrzeugsteuerungscluster, umfassend jeweils einen Haupt-Auftraggeber und zumindest einen Neben-Auftraggeber und einen Haupt-Auftragnehmer und zumindest einen Neben-Auftragnehmer, die miteinander und untereinander über Kommunikationsverbindungen in Wirkverbindung stehen. Dabei ist für jede von einem der Auftraggeber an einen der Auftragnehmer übermittelte auszuführende Aufgabe eine Priorisierung der Wirkverbindungen vorgesehen, wobei jede der in jeder der Wirkketten vorgesehenen Komponenten des zumindest einen Auftraggebers und jede der in jeder der Wirkketten vorgesehenen Komponenten des zumindest einen Auftragnehmers ihren eigenen Verfügbarkeits-Zustand erfasst und anderen Komponenten zur Verfügung stellt. Weiter erfolgt im Falle des Verfügbarkeits-Zustandes der Nicht-Verfügbarkeit einer der Komponenten eine Auswahl einer Wirkkette zur Durchführung der auszuführenden Aufgabe basierend auf der Priorisierung der Wirkverbindung und eine Aktivierung der ausgewählten Wirkverbindung.

Der Erfindung liegt das technische Problem zugrunde, eine verbesserte Vorrichtung zur Erzeugung von Steuerbefehlen für ein automatisiert fahrendes Kraftfahrzeug zu schaffen sowie ein geeignetes Verfahren zur Verfügung zu stellen.

Die Lösung des technischen Problems ergibt sich durch eine Vorrichtung mit den Merkmalen des Anspruchs 1 sowie ein Verfahren mit den Merkmalen des Anspruchs 7. Weitere vorteilhafte Ausgestaltungen der Erfindung ergeben sich aus den Unteransprüchen.

Hierzu ist die Vorrichtung zur Erzeugung und Übertragung von Steuerbefehlen für ein automatisiert fahrendes Kraftfahrzeug derart ausgebildet, mindestens Umfelddaten und Fahrzeugzustandsdaten zu empfangen, daraus mindestens eine Trajektorie zu berechnen, die für die Umsetzung der Trajektorie benötigten Steuerbefehle für mindestens einen Aktor zu berechnen und an den mindestens einen Aktor zu übertragen, wobei die Vorrichtung mindestens ein erstes Teilsystem, ein zweites Teilsystem, ein drittes Teilsystem und ein viertes Teilsystem umfasst, wobei das erste Teilsystem und das dritte Teilsystem als Master und das zweite Teilsystem und das vierte Teilsystem als Slave arbeiten, wobei das erste Teilsystem und das zweite Teilsystem über mindestens eine Datenverbindung verbunden sind und das dritte Teilsystem und das vierte Teilsystem über eine weitere Datenverbindung miteinander verbunden sind, wobei zusätzlich das erste Teilsystem und das dritte Teilsystem über mindestens eine Datenverbindung miteinander verbunden sind und das zweite Teilsystem und das vierte Teilsystem über eine Datenverbindung miteinander verbunden sind, wobei das erste Teilsystem und das zweite Teilsystem jeweils mindestens Umfelddaten und Fahrzeugzustandsdaten empfangen und das dritte Teilsystem und das vierte Teilsystem mindestens die Steuerbefehle an die mindestens eine Aktorik übertragen, wobei mindestens das erste Teilsystem und das dritte Teilsystem fail-silent ausgebildet sind, wobei die Vorrichtung weiter derart ausgebildet ist, bei Einzelfehlern eines Teilsystems mindestens einen Steuerbefehl zu erzeugen und zu übertragen, um das Kraftfahrzeug in einen sicheren Zustand zu bringen.

Die ersten bis vierten Teilsysteme können dabei auch als Knoten in einem Netzwerk betrachtet werden. Die Umfelddaten können dabei von einer fahrzeugseitigen Umfeldsensorik stammen, die beispielsweise Kameras und/oder Radarsensoren und/oder Lidarsensoren und/oder Ultraschallsensoren aufweist. Alternativ oder ergänzend können die Umfelddaten von externen Sensoren einer Verkehrsinfrastruktur und/oder von anderen Kraftfahrzeugen stammen. Die Fahrzeugzustandsdaten sind insbesondere Ort, Geschwindigkeit und Richtung des automatisiert fahrenden Kraftfahrzeugs. Dabei können das erste Teilsystem und das zweite Teilsystem die gleichen Umfelddaten und/oder Fahrzeugzustandsdaten empfangen oder aber Daten von verschiedenen Datenquellen. Dass das erste Teilsystem und das dritte Teilsystem fail-silent sind, bedeutet, dass diese im Fehlerfall "stumm" sind und nicht mehr an der Kommunikation teilnehmen. Vorzugsweise ist dem ersten und dritten Teilsystem eine erste Spannungsversorgung und dem zweiten und vierten Teilsystem eine zweite Spannungsversorgung zugeordnet, wobei die erste und zweite Spannungsversorgung voneinander unabhängig sind. Es ist aber auch möglich, jedem Teilsystem eine eigene, unabhängige Spannungsversorgung zuzuordnen.

Durch die Master-Slave-Konfiguration können das dritte und vierte Teilsystem die gleiche Aktorik ansteuern, ohne dass es zu Konflikten kommt, wobei durch die Ringstruktur gewährleistet ist, dass stets die Steuerbefehle berechnet und übertragen werden können. Der sichere Zustand beinhaltet auch, dass das Kraftfahrzeug noch weiter automatisiert fahren kann (entweder für eine begrenzte Strecke oder mit eingeschränkter Performance bzw. Geschwindigkeit).

Weiter ist die Vorrichtung derart ausgebildet, dass im fehlerfreien Betrieb die Steuerbefehle für die Aktorik durch das zweite oder vierte Teilsystem berechnet und übertragen werden. Dabei sind das zweite und vierte Teilsystem höher an Rechenleistung ausgelegt im Vergleich zum ersten und dritten Teilsystem. Das erste und dritte Teilsystem können dann im Aufbau einfacher gestaltet werden, sodass sich deren Zuverlässigkeit und Ausfallsicherheit entsprechend erhöht.

Dabei berechnen das erste und zweite Teilsystem jeweils die mindestens eine Trajektorie und vorzugsweise auch die Steuerbefehle, wobei dann das dritte und vierte Teilsystem nur für die Übertragung zu den Aktoren zuständig sind. Hierdurch können diese dann sehr einfach und robust ausgestaltet sein.

In einer Ausführungsform sind auch das zweite und/oder vierte Teilsystem fail-silent ausgebildet, sodass die diesbezügliche Überwachung durch die Master entfallen kann. Dabei sind verschiedene Realisierungen von fail-silent möglich. Dabei können auch in den Teilsystemen unterschiedliche Realisierungen vorgenommen werden. So kann beispielsweise eine watchdog-Schaltung mit einer hardwired and-Verbindung (aka shutoff path) zur Anwendung kommen, wobei der wachtdog auch in einem Sub-Controller angeordnet sein kann, der einen Main-Controller überwacht.

In einer weiteren Ausführungsform ist die Vorrichtung derart ausgebildet, dass bei einem Doppelfehler, von dem mindestens nicht das dritte Teilsystem oder das vierte Teilsystem betroffen sind, von dem dritten Teilsystem oder dem vierten Teilsystem ein Steuerbefehl für einen Nothalt erzeugt wird.

In einer weiteren Ausführungsform ist zusätzlich das erste Teilsystem mit dem vierten Teilsystem und/oder das zweite Teilsystem mit dem dritten Teilsystem verbunden. Hierdurch kann einerseits der Datenverkehr im Fehlerfall beschleunigt werden.

In einer weiteren Ausführungsform bestehen das dritte Teilsystem und das vierte Teilsystem aus jeweils mindestens zwei separaten Untersystemen. Die Untersysteme sind beispielsweise Ansteuereinheiten für ein Lenk-, Brems-, Antriebs- oder Getriebesystem.

Hinsichtlich der verfahrensmäßigen Ausgestaltung der Erfindung wird vollinhaltlich auf die vorangegangenen Ausführungen Bezug genommen.

Die Erfindung wird nachfolgend anhand bevorzugter Ausführungsbeispiele näher erläutert. Die Figuren zeigen:
- Fig. 1: eine schematische Darstellung einer Vorrichtung zur Erzeugung von Steuerbefehlen für ein automatisiert fahrendes Kraftfahrzeug in einer ersten Ausführungsform,
- Fig. 2: eine schematische Darstellung einer Vorrichtung in einer zweiten Ausführungsform und
- Fig. 3: eine schematische Darstellung einer Vorrichtung in einer dritten Ausführungsform.

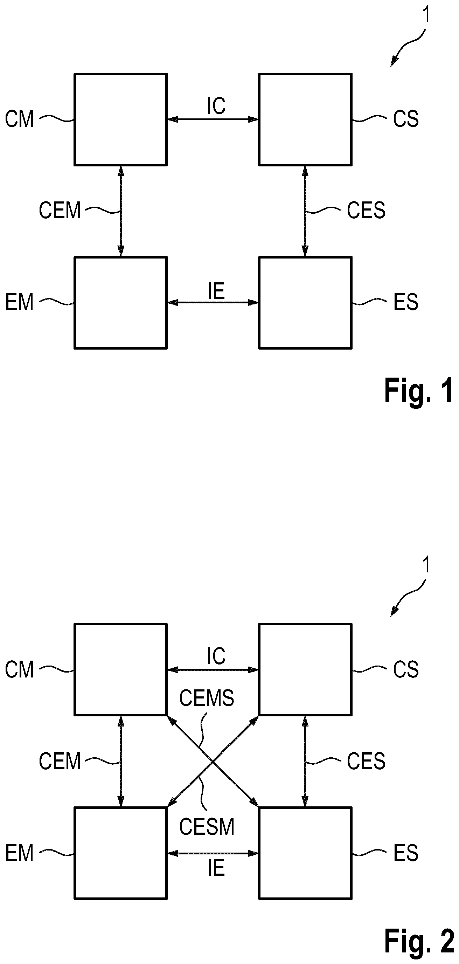

In der Fig. 1 ist schematisch eine Vorrichtung 1 zur Erzeugung von Steuerbefehlen für ein automatisiert fahrendes Kraftfahrzeug dargestellt. Die Vorrichtung 1 umfasst ein erstes Teilsystem CM (Commander Master), ein zweites Teilsystem CS (Commander Slave), ein drittes Teilsystem EM (Executor Master) und ein viertes Teilsystem ES (Executor Slave). Das erste Teilsystem CM und das zweite Teilsystem CS sind über eine Datenverbindung IC (Inter Commander) miteinander verbunden. Ebenso sind das dritte Teilsystem EM und das vierte Teilsystem ES über eine Datenverbindung IE (Inter Executor Connection) miteinander datentechnisch verbunden. Weiter sind das erste Teilsystem CM und das dritte Teilsystem EM über eine Datenverbindung CEM (Commander-Executor Connection Master) miteinander verbunden. Schließlich sind das zweite Teilsystem CS und das vierte Teilsystem ES über eine Datenverbindung CES (Commander-Executor Connection Slave) miteinander verbunden. Dabei sind alle vier Teilsysteme CM, CS, EM und ES fail-silent ausgebildet.

Das erste Teilsystem CM und zweite Teilsystem CS erhalten Umfelddaten und Fahrzeugzustandsdaten und berechnen daraus jeweils eine Trajektorie. Dabei können die beiden Teilsysteme CM, CS die gleichen Daten erhalten oder aber diese erhalten die Daten von unterschiedlichen Sensorsystemen bzw. Datenquellen. Die Sensorsysteme bzw. Datenquellen können fahrzeugseitig und/oder extern sein. Das erste Teilsystem CM überträgt über die Datenverbindung CEM seine Trajektorie an das dritte Teilsystem EM und das zweite Teilsystem CS überträgt seine Trajektorie an das vierte Teilsystem ES. Das dritte und vierte Teilsystem EM, ES berechnen dann jeweils Steuerbefehle für die Aktoren. Vorzugsweise werden im fehlerfreien Betrieb nur die Steuerbefehle des vierten Teilsystems ES zur Ansteuerung der Aktoren verwendet. Alternativ können das erste Teilsystem CM und das zweite Teilsystem CS zusätzlich noch die Steuerbefehle berechnen und dann die Steuerbefehle an das dritte Teilsystem (EM) bzw. vierte Teilsystem (ES) übertragen, die dann die Steuerbefehle an die Aktoren übertragen.

Dabei existieren grundsätzlich drei Arten von Steuerbefehlen, nämlich Steuerbefehle SB für den fehlerfreien Betrieb, Steuerbefehle SSS (System Safe State), um im Einzelfehlerfall das Kraftfahrzeug in einen sicheren Zustand zu überführen, und Steuerbefehle ESS (Executor Safe State) für einen Nothalt, die nur durch das dritte oder vierte Teilsystem EM, ES erzeugt werden. Im fehlerfreien Normalbetrieb werden die Daten des zweiten und vierten Teilsystems CS, ES für die Führung des Kraftfahrzeugs verwendet. Im Einzelfehler-Fall kann dann aufgrund der Struktur stets ein Steuerbefehl SSS initiiert und umgesetzt werden, was in der nachfolgenden Tabelle dargestellt ist.

| Fehler | fehlerhafte Komponente | detektiert durch | Reaktion für SSS | Steuerpfad | weitere Reaktion für ESS, wenn aufgrund von Doppelfehler kein SSS detektiert wird |
|---|---|---|---|---|---|
| - | - | - | - | CS-CES-ES | - |
| Ausfall | CM | CS, EM | CS veranlasst SSS | CS-CES-ES | EM veranlasst ESS |
| | CS | CM, ES | CM veranlasst SSS | CM-CEM-EM | EM veranlasst |
| | | | EM schaltet zu CEM | | ESS |
| | EM | CM, ES | CM informiert CS | CS-CES-ES | ES veranlasst |
| | | | ES informiert CS | | ESS |
| | | | ES handelt solo | | |
| | | | CS veranlasst SSS | | |
| | ES | CS, EM | CS informiert CM | CS-IC-CM-CEM-EM | EM veranlasst |
| | | | EM informiert CM | | ESS |
| | | | EM schaltet zu CEM | | |
| | | | CM/CS schaltet zu CEM | | |
| | | | CS veranlasst SSS | | |
| | IC | CM, CS | CM veranlasst SSS | CM-CEM-EM | EM veranlasst |
| | | | CS veranlasst SSS | | ESS |
| | | | EM schaltet zu CEM | | |
| | CEM | CM, EM | CM informiert CS | CS-CES-ES | EM veranlasst |
| | | | CS veranlasst SSS | | ESS |
| | CES | CS, ES | CS informiert CM | CS-IC-CM-CEM-EM | EM veranlasst |
| | | | CM/CS schaltet zu CEM | | ESS |
| | | | CS veranlasst SSS | | |
| | | | EM schaltet zu CEM | | |
| | IE | EM, ES | EM informiert CM | CS-IC-CM-CEM-EM | ES veranlasst |
| | | | ES informiert CS | | ESS |
| | | | CM/CS schaltet zu CEM | | |
| | | | EM schaltet zu CEM | | |
| | | | ES handelt solo | | |
| | | | CS veranlasst SSS | | |
| | DC-Master (Spannungsversorgung) | CS, ES | CS veranlasst SSS | CS-CES-ES | ES veranlasst |
| | | | ES handelt solo | | ESS |
| | DC-Master (Spannungsversorgung) | CM, EM | CM veranlasst SSS EM schaltet zu CEM | CM-CEM-EM | EM veranlasst ESS |
| | CM und CS | EM, ES | Doppelfehler | | EM veranlasst ESS |
| | CM and CES | EM, ES | Doppelfehler | | EM veranlasst ESS |
| | EM und ES | Doppelfehler, keine Möglichkeit | | | |
| fehlerhafter Betrieb | CM | CM | CM schaltet aus | CS-CES-ES | EM veranlasst |
| | | | CS veranlasst SSS | | ESS |
| | CS | CS (algorrithmisch) | CS schaltet aus | CM-CEM-EM | EM veranlasst |
| | | | CM veranlasst SSS | | ESS |
| | | | EM schaltet zu CEM | | |
| | CS | CM (semantisch) | CM veranlasst SSS | CM-CEM-EM | EM veranlasst |
| | | | EM schaltet zu CEM | | ESS |
| | EM | EM | EM schaltet aus | CS-CES-ES | ES veranlasst |
| | | | CM informiert CS | | ESS |
| | | | ES informiert CS | | |
| | | | ES handelt solo | | |
| | | | CS veranlasst SSS | | |
| | ES | ES | ES schaltet aus | CS-IC-CM-CEM-EM | EM veranlasst |
| | | | EM informiert CM | | ESS |
| | | | EM schaltet zu CEM | | |
| | | | CM/CS schaltet zu CEM | | |
| | | | CS veranlasst SSS | | |
| | CM und CS | EM, ES | Doppelfehler | | EM veranlasst ESS |
| | EM und ES | Doppelfehler, keine Möglichkeit | | | |

Anhand der Tabelle sind auch die Funktionen der einzelnen Teilsysteme und deren Verbindungen noch deutlicher geworden und lassen sich wie folgt zusammenfassen:
- Erstes Teilsystem CM:: überprüft das zweite Teilsystem CS und das dritte Teilsystem EM, übermittelt Befehle an das dritte Teilsystem EM und generiert Befehle für Steuerbefehle SSS, wenn notwendig;
- Zweites Teilsystem CS:: überprüft erstes Teilsystem CM und viertes Teilsystem ES, generiert Steuerbefehle für Normalbetrieb oder Steuerbefehle SSS, wenn notwendig;
- Drittes Teilsystem EM:: überprüft erstes Teilsystem CM und viertes Teilsystem ES, entscheidet, welcher Steuerpfad genutzt wird, führt Steuerbefehle ESS aus, wenn notwendig;
- Viertes Teilsystem ES:: überprüft drittes Teilsystem EM und zweites Teilsystem CS, übermittelt Slave-Befehle an drittes Teilsystem und führt Befehle vom dritten Teilsystem aus, führt Steuerbefehle vom zweiten Teilsystem CS im Normalbetrieb aus und führt Steuerbefehle ESS alleine aus, wen Master EM nicht vorhanden;
- Verbindung IC:: CM → CS: übermittelt Status des ersten Teilsystems CM und des dritten Teilsystems EM an zweites Teilsystem CS; CS → CM: übermittelt Status des zweiten Teilsystems CS und des vierten Teilsystems ES an das erste Teilsystem, übermittelt Befehle und Statusinformationen zu Steuerbefehlen SSS an das erste Teilsystem;
- Verbindung IE:: EM → ES: übermittelt Status vom dritten Teilsystem, entscheidet über die Ausführung der Steuerbefehle von dem dritten oder dem vierten Teilsystem; ES → EM: übermittelt Status vom vierten und zweiten Teilsystem, Status der Steuerbefehle SSS vom zweiten Teilsystem, Befehle vom zweiten Teilsystem;
- Verbindung CEM:: CM → EM: Status des ersten Teilsystems, Status der Steuerbefehle SSS, Steuerbefehle; EM → CM: Status des dritten und vierten Teilsystems;
- Verbindung CES:: CS → ES: Status des zweiten Teilsystems, Status der Steuerbefehle SSS, Steuerbefehle; ES → CS: Status des dritten und vierten Teilsystems;

In der Fig. 2 ist eine alternative Ausführungsform dargestellt, die zwei weitere Datenverbindungen aufweist, nämlich eine Datenverbindung CEMS zwischen dem ersten Teilsystem CM und dem vierten Teilsystem ES und eine Datenverbindung CESM zwischen dem zweiten Teilsystem CS und dem dritten Teilsystem EM. Hierdurch ist zwischen diesen Teilsystemen ein direkter Austausch von Statussignalen und Steuerbefehlen möglich, was den Ablauf beschleunigt.

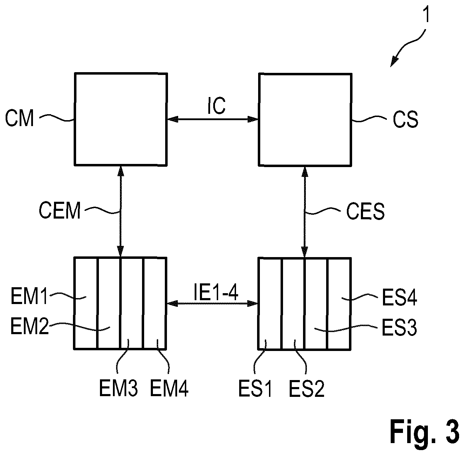

In der Fig. 3 ist eine weitere alternative Ausführungsform der Vorrichtung 1 dargestellt. Dabei bestehen die dritten und vierten Teilsysteme jeweils aus separaten Untersystemen EM1-EM4 bzw. ES1-ES4. Beispielsweise dienen die beiden Untersysteme EM1 und ES1 zur Ansteuerung eines Lenkaktors bzw. Lenksystems, die Untersysteme EM2 und ES2 zur Ansteuerung eines Bremsaktors bzw. Bremssystems usw. Dabei kann die Datenverbindung IE wie dargestellt ebenfalls in Datenverbindungen IE1-IE4 unterteilt sein. Der Vorteil ist dann eine einfachere Erweiterbarkeit der Vorrichtung 1.

## Patentansprüche

1. Vorrichtung (1) zur Erzeugung und Übertragung von Steuerbefehlen für ein automatisiert fahrendes Kraftfahrzeug, wobei die Vorrichtung (1) derart ausgebildet ist, mindestens Umfelddaten und Fahrzeugzustandsdaten zu empfangen, daraus mindestens eine Trajektorie zu berechnen, die für die Umsetzung der Trajektorie benötigten Steuerbefehle für mindestens einen Aktor zu berechnen und an den mindestens einen Aktor zu übertragen, wobei die Vorrichtung (1) mindestens ein erstes Teilsystem (CM), ein zweites Teilsystem (CS), ein drittes Teilsystem (EM) und ein viertes Teilsystem (ES) umfasst, wobei das erste Teilsystem (CM) und das dritte Teilsystem (EM) als Master und das zweite Teilsystem (CS) und das vierte Teilsystem (ES) als Slave arbeiten, wobei das erste Teilsystem (CM) und das zweite Teilsystem (CS) über mindestens eine Datenverbindung (IC) verbunden sind und das dritte Teilsystem (EM) und das vierte Teilsystem (ES) über eine weitere Datenverbindung (IE) miteinander verbunden sind, wobei zusätzlich das erste Teilsystem (CM) und das dritte Teilsystem (EM) über mindestens eine Datenverbindung (CEM) miteinander verbunden sind und das zweite Teilsystem (CS) und das vierte Teilsystem (ES) über eine Datenverbindung (CES) miteinander verbunden sind, wobei das erste Teilsystem (CM) und das zweite Teilsystem (CS) jeweils mindestens Umfelddaten und Fahrzeugzustandsdaten empfangen und das dritte Teilsystem (EM) und das vierte Teilsystem (ES) mindestens die Steuerbefehle an die mindestens eine Aktorik übertragen, wobei mindestens das erste Teilsystem (CM) und das dritte Teilsystem (EM) fail-silent ausgebildet sind, wobei die Vorrichtung (1) weiter derart ausgebildet ist, bei Einzelfehlern eines Teilsystems (CM, CS, EM, ES) mindestens einen Steuerbefehl (SSS) zu erzeugen und zu übertragen, um das Kraftfahrzeug in einen sicheren Zustand zu bringen, wobei das erste Teilsystem (CM) und das zweite Teilsystem (CS) derart ausgebildet sind, dass diese jeweils mindestens eine Trajektorie berechnen, wobei die Vorrichtung (1) derart ausgebildet ist, dass im fehlerfreien Betrieb die Steuerbefehle (SB) für die Aktorik durch das zweite Teilsystem (CS) oder das vierte Teilsystem (ES) berechnet und ausgegeben werden, wobei das zweite Teilsystem (CS) und das vierte Teilsystem (ES) höher an Rechenleistung ausgelegt sind im Vergleich zum ersten Teilsystem (CM) und dritten Teilsystem (EM).

2. Vorrichtung nach Anspruch 1, **dadurch gekennzeichnet, dass** das erste Teilsystem (CM) und das zweite Teilsystem (CS) derart ausgebildet sind, dass diese jeweils die Steuerbefehle für den mindestens einen Aktor berechnen.

3. Vorrichtung nach einem der vorangegangenen Ansprüche, **dadurch gekennzeichnet, dass** das zweite Teilsystem (CS) und/oder das vierte Teilsystem (ES) fail-silent ausgebildet sind.

4. Vorrichtung nach einem der vorangegangenen Ansprüche, **dadurch gekennzeichnet, dass** die Vorrichtung (1) derart ausgebildet ist, dass bei einem Doppelfehler, von dem mindestens nicht das dritte Teilsystem (EM) oder das vierte Teilsystem (ES) betroffen sind, von dem dritten Teilsystem (EM) oder dem vierten Teilsystem (ES) ein Steuerbefehl (ESS) für einen Nothalt erzeugt wird.

5. Vorrichtung nach einem der vorangegangenen Ansprüche, **dadurch gekennzeichnet, dass** zusätzlich das erste Teilsystem (CM) mit dem vierten Teilsystem (ES) über eine Datenverbindung (CEMS) verbunden ist und/oder das zusätzlich das zweite Teilsystem (CS) mit dem dritten Teilsystem (EM) über eine Datenverbindung (CESM) verbunden ist.

6. Vorrichtung nach einem der vorangegangenen Ansprüche, **dadurch gekennzeichnet, dass** das dritte Teilsystem (EM) und das vierte Teilsystem (ES) aus jeweils mindestens zwei separaten Untersystemen (EM1-EM4, ES1-ES4) bestehen.

7. Verfahren zur Erzeugung und Übertragung von Steuerbefehlen für ein automatisiert fahrendes Kraftfahrzeug, wobei mindestens Umfelddaten und Fahrzeugzustandsdaten empfangen werden, daraus mindestens eine Trajektorie berechnet wird, die für die Umsetzung der Trajektorie benötigten Steuerbefehle für mindestens einen Aktor berechnet und an den mindestens einen Aktor übertragen werden, mittels mindestens einem ersten Teilsystem (CM), einem zweiten Teilsystem (CS), einem dritten Teilsystem (EM) und einem vierten Teilsystem (ES, wobei die Teilsysteme (CM, CS, ES, EM) über eine Ringstruktur verbunden sind, das erste Teilsystem (CM) und das dritte Teilsystem (EM) fail-silent sind und als Master arbeiten und das zweite Teilsystem (CS) und vierte Teilsystem (ES) als Slaves arbeiten, wobei das erste Teilsystem (CM) und das zweite Teilsystem (CS) jeweils mindestens Umfelddaten und Fahrzeugzustandsdaten empfangen und das dritte Teilsystem (EM) und das vierte Teilsystem (ES) mindestens die Steuerbefehle an den mindestens einen Aktor übertragen, wobei bei Einzelfehlern eines Teilsystems (CM, CS, EM, ES) mindestens ein Steuerbefehl (SSS) erzeugt wird, um das Kraftfahrzeug in einen sicheren Zustand zu bringen, wobei das erste Teilsystem (CM) und zweite Teilsystem (CS) über mindestens eine Datenverbindung (IC) verbunden sind und das dritte Teilsystem (EM) und das vierte Teilsystem (ES) über eine weitere Datenverbindung (IE) miteinander verbunden sind und wobei zusätzlich das erste Teilsystem (CM) und das dritte Teilsystem (EM) über mindestens eine Datenverbindung (CEM) miteinander verbunden sind und das zweite Teilsystem (CS) und das vierte Teilsystem (ES) über eine Datenverbindung (CES) miteinander verbunden sind, wobei das erste Teilsystem (CM) und das zweite Teilsystem (CS) jeweils mindestens eine Trajektorie berechnen, wobei im fehlerfreien Betrieb die Steuerbefehle (SB) für die Aktorik durch das zweite Teilsystem (CS) oder das vierte Teilsystem (ES) berechnet und ausgegeben werden, wobei das zweite Teilsystem (CS) und das vierte Teilsystem (ES) höher an Rechenleistung ausgelegt sind im Vergleich zum ersten Teilsystem (CM) und dritten Teilsystem (EM).

## Claims

1. Device (1) for generating and transmitting control commands for an autonomously driving motor vehicle, wherein the device (1) is configured to receive at least environment data and vehicle status data, to calculate at least one trajectory therefrom, to calculate the control commands required for the implementation of the trajectory for at least one actuator and to transmit them to the at least one actuator, wherein the device (1) comprises at least a first subsystem (CM), a second subsystem (CS), a third subsystem (EM) and a fourth subsystem (ES), wherein the first subsystem (CM) and the third subsystem (EM) operate as masters and the second subsystem (CS) and the fourth subsystem (ES) operate as slaves, wherein the first subsystem (CM) and the second subsystem (CS) are connected via at least one data connection (IC) and the third subsystem (EM) and the fourth subsystem (ES) are connected to one another via a further data connection (IE), wherein additionally the first subsystem (CM) and the third subsystem (EM) are connected to one another via at least one data connection (CEM) and the second subsystem (CS) and the fourth subsystem (ES) are connected to one another via a data connection (CES), wherein the first subsystem (CM) and the second subsystem (CS) each receive at least environment data and vehicle status data and the third subsystem (EM) and the fourth subsystem (ES) transmit at least the control commands to the at least one actuator system, wherein at least the first subsystem (CM) and the third subsystem (EM) are configured to be fail-silent, wherein the device (1) is further configured to generate and transmit at least one control command (SSS) in the event of individual errors in a subsystem (CM, CS, EM, ES) in order to bring the motor vehicle into a safe state, wherein the first subsystem (CM) and the second subsystem (CS) are configured such that they each calculate at least one trajectory, wherein the device (1) is configured such that in error-free operation the control commands (SB) for the actuator system are calculated and output by the second subsystem (CS) or the fourth subsystem (ES), wherein the second subsystem (CS) and the fourth subsystem (ES) are configured for higher computing power compared with the first subsystem (CM) and third subsystem (EM).

2. Device according to claim 1, **characterized in that** the first subsystem (CM) and the second subsystem (CS) are configured such that they each calculate the control commands for the at least one actuator.

3. Device according to either of the preceding claims, **characterized in that** the second subsystem (CS) and/or the fourth subsystem (ES) are configured to be fail-silent.

4. Device according to any of the preceding claims, **characterized in that** the device (1) is configured such that in the event of a double fault which does not affect at least the third subsystem (EM) or the fourth subsystem (ES), a control command (ESS) for an emergency stop is generated by the third subsystem (EM) or the fourth subsystem (ES).

5. Device according to any of the preceding claims, **characterized in that** additionally, the first subsystem (CM) is connected to the fourth subsystem (ES) via a data connection (CEMS) and/or additionally the second subsystem (CS) is connected to the third subsystem (EM) via a data connection (CESM).

6. Device according to any of the preceding claims, **characterized in that** the third subsystem (EM) and the fourth subsystem (ES) each consist of at least two separate lower-level systems (EM1-EM4, ES1-ES4).

7. Method for generating and transmitting control commands for an autonomously driving motor vehicle, wherein at least environment data and vehicle status data are received, at least one trajectory is calculated therefrom, the control commands required for the implementation of the trajectory are calculated for at least one actuator and transmitted to the at least one actuator, by means of at least a first subsystem (CM), a second subsystem (CS), a third subsystem (EM) and a fourth subsystem (ES), wherein the subsystems (CM, CS, ES, EM) are connected via a ring structure, the first subsystem (CM) and the third subsystem (EM) are fail-silent and operate as masters and the second subsystem (CS) and fourth subsystem (ES) operate as slaves, wherein the first subsystem (CM) and the second subsystem (CS) each receive at least environment data and vehicle status data and the third subsystem (EM) and the fourth subsystem (ES) transmit at least the control commands to the at least one actuator, wherein in the event of individual errors in a subsystem (CM, CS, EM, ES) at least one control command (SSS) is generated in order to bring the motor vehicle into a safe state, wherein the first subsystem (CM) and second subsystem (CS) are connected via at least one data connection (IC) and the third subsystem (EM) and the fourth subsystem (ES) are connected to one another via a further data connection (IE) and wherein additionally, the first subsystem (CM) and the third subsystem (EM) are connected to one another via at least one data connection (CEM) and the second subsystem (CS) and the fourth subsystem (ES) are connected to one another via a data connection (CES), wherein the first subsystem (CM) and the second subsystem (CS) each calculate at least one trajectory, wherein in error-free operation the control commands (SB) for the actuator system are calculated and output by the second subsystem (CS) or the fourth subsystem (ES), wherein the second subsystem (CS) and the fourth subsystem (ES) are configured for higher computing power compared with the first subsystem (CM) and third subsystem (EM).

## Revendications

1. Dispositif (1) permettant de générer et transmettre des instructions de commande pour un véhicule automobile circulant en mode automatisé, le dispositif (1) étant conçu de manière à recevoir au moins des données d'environnement et des données d'état de véhicule, à calculer à partir de celles-ci au moins une trajectoire, à calculer les instructions de commande nécessaires à la mise en oeuvre de la trajectoire pour au moins un actionneur et à les transmettre à l'au moins un actionneur, le dispositif (1) comprenant au moins un premier système partiel (CM), un deuxième système partiel (CS), un troisième système partiel (EM) et un quatrième système partiel (ES), le premier système partiel (CM) et le troisième système partiel (EM) fonctionnant comme maître et le deuxième système partiel (CS) et le quatrième système partiel (ES) comme esclave, le premier système partiel (CM) et le deuxième système partiel (CS) étant reliés par l'intermédiaire d'au moins une liaison de données (IC) et le troisième système partiel (EM) et le quatrième système partiel (ES) étant reliés entre eux par l'intermédiaire d'une autre liaison de données (IE), le premier système partiel (CM) et le troisième système partiel (EM) étant en outre reliés entre eux par l'intermédiaire d'au moins une liaison de données (CEM) et le deuxième système partiel (CS) et le quatrième système partiel (ES) étant reliés entre eux par l'intermédiaire d'une liaison de données (CES), le premier système partiel (CM) et le deuxième système partiel (CS) recevant respectivement au moins des données d'environnement et des données d'état de véhicule et le troisième système partiel (EM) et le quatrième système partiel (ES) transmettant au moins les instructions de commande à l'au moins un actionneur, au moins le premier système partiel (CM) et le troisième système partiel (EM) étant conçus sous forme de système à silence sur défaillance, le dispositif (1) étant en outre conçu de manière à générer et à transmettre au moins une instruction de commande (SSS) en cas de défauts individuels d'un système partiel (CM, CS, EM, ES), pour amener le véhicule automobile dans un état de sécurité, le premier système partiel (CM) et le deuxième système partiel (CS) étant conçus de telle sorte qu'ils calculent respectivement au moins une trajectoire, le dispositif (1) étant conçu de telle sorte qu'en fonctionnement sans défaut, les instructions de commande (SB) pour l'actionneur sont calculées et émises par le deuxième système partiel (CS) ou le quatrième système partiel (ES), le deuxième système partiel (CS) et le quatrième système partiel (ES) étant réalisés avec une puissance de calcul supérieure par comparaison avec le premier système partiel (CM) et le troisième système partiel (EM).

2. Dispositif selon la revendication 1, **caractérisé en ce que** le premier système partiel (CM) et le deuxième système partiel (CS) sont conçus de telle sorte qu'ils calculent respectivement les instructions de commande pour l'au moins un actionneur.

3. Dispositif selon l'une des revendications précédentes,
**caractérisé en ce que** le deuxième système partiel (CS) et/ou le quatrième système partiel (ES) sont réalisés sous forme de système à silence sur défaillance.

4. Dispositif selon l'une des revendications précédentes,
**caractérisé en ce que** le dispositif (1) est conçu de telle sorte qu'en cas de double erreur qui n'affecte pas au moins le troisième système partiel (EM) ou le quatrième système partiel (ES), une instruction de commande (ESS) pour un arrêt d'urgence est générée par le troisième système partiel (EM) ou le quatrième système partiel (ES).

5. Dispositif selon l'une des revendications précédentes,
**caractérisé en ce qu'**en outre le premier système partiel (CM) est relié au quatrième système partiel (ES) par l'intermédiaire d'une liaison de données (CEMS) et/ou **en ce qu'**en outre le deuxième système partiel (CS) est relié au troisième système partiel (EM) par l'intermédiaire d'une liaison de données (CESM).

6. Dispositif selon l'une des revendications précédentes,
**caractérisé en ce que** le troisième système partiel (EM) et le quatrième système partiel (ES) sont constitués respectivement d'au moins deux sous-systèmes distincts (EM1-EM4, ES1-ES4).

7. Procédé permettant de générer et transmettre des instructions de commande pour un véhicule automobile circulant en mode automatisé, dans lequel au moins des données d'environnement et des données d'état de véhicule sont reçues, au moins une trajectoire est calculée à partir de celles-ci, les instructions de commande nécessaires pour la mise en oeuvre de la trajectoire sont calculées pour au moins un actionneur et transmises à l'au moins un actionneur, à l'aide d'au moins un premier système partiel (CM), un deuxième système partiel (CS), un troisième système partiel (EM) et un quatrième système partiel (ES), les systèmes partiels (CM, CS, ES, EM) étant reliés par l'intermédiaire d'une structure en anneau, le premier système partiel (CM) et le troisième système partiel (EM) étant des systèmes à silence sur défaillance et fonctionnant comme maîtres et le deuxième système partiel (CS) et le quatrième système partiel (ES) fonctionnant comme esclaves, le premier système partiel (CM) et le deuxième système partiel (CS) recevant respectivement au moins des données d'environnement et des données d'état de véhicule et le troisième système partiel (EM) et le quatrième système partiel (ES) transmettant au moins les instructions de commande à l'au moins un actionneur, en cas de défauts individuels d'un système partiel (CM, CS, EM, ES), au moins une instruction de commande (SSS) étant générée afin de mettre le véhicule automobile dans un état de sécurité, le premier système partiel (CM) et le deuxième système partiel (CS) étant reliés par au moins une liaison de données (IC) et le troisième système partiel (EM) et le quatrième système partiel (ES) étant reliés entre eux par une autre liaison de données (IE) et, en outre, le premier système partiel (CM) et le troisième système partiel (EM) étant reliés entre eux par au moins une liaison de données (CEM) et le deuxième système partiel (CS) et le quatrième système partiel (ES) étant reliés entre eux par une liaison de données (CES), le premier système partiel (CM) et le deuxième système partiel (CS) calculant respectivement au moins une trajectoire, les instructions de commande (SB) pour l'actionneur étant calculées et émises par le deuxième système partiel (CS) ou le quatrième système partiel (ES) en cas de fonctionnement sans erreur, le deuxième système partiel (CS) et le quatrième système partiel (ES) étant conçus avec une puissance de calcul plus élevée par rapport au premier système partiel (CM) et au troisième système partiel (EM).
